Europäisches Patentamt

European Patent Office

Office européen des brevets

(11) Publication number: **0 226 450 B1**

(12) **EUROPEAN PATENT SPECIFICATION**

(45) Date of publication of patent specification: **25.03.92** (51) Int. Cl.⁵: **H02P 7/00, B41J 19/14**

(21) Application number: **86309605.3**

(22) Date of filing: **10.12.86**

(54) **Print head motor control system for printer with moving print head.**

(30) Priority: **11.12.85 US 807708**

(43) Date of publication of application:
**24.06.87 Bulletin 87/26**

(45) Publication of the grant of the patent:
**25.03.92 Bulletin 92/13**

(84) Designated Contracting States:
**DE FR GB**

(56) References cited:
**EP-A- 0 077 455**
**DE-A- 3 204 943**
**US-A- 4 371 819**

(73) Proprietor: **International Business Machines Corporation**
**Old Orchard Road**
**Armonk, N.Y. 10504(US)**

(72) Inventor: **Cavill, Barry Richard**
**10302 Roundhouse Circle**
**Charlotte North Carolina 28212(US)**
Inventor: **Malkemes, Charles David**
**4728 Rea Road**
**Matthews North Carolina 28105(US)**
Inventor: **Reinberg, Kevin Michael**
**10910 Whisper Hollow St.**
**San Antonio§Texas 78230-3606(US)**
Inventor: **Schulz, Raymond Andrew**
**8317 Morningside Drive**
**Manassas Virginia 22111(US)**

(74) Representative: **Atchley, Martin John Waldegrave**
**IBM United Kingdom Limited Intellectual Property Department Hursley Park Winchester Hampshire SO21 2JN(GB)**

## Description

The present invention relates to a print head motor control system for a printer of the type which comprises a print head which is moved across a printing medium during a printing operation (e.g. EP-A-0 077 455).

Typically, in the past, printers have operated with the print head moving at a single or at best just a few different speeds. In these types of printer, normally a conventional servo-mechanism velocity print head motor control system has been employed. In such a conventional system, the print head steady-state velocity is adjusted to a desired value by taking the difference between the measured print head speed and the desired print head speed and changing the drive voltage of the print head motor by a magnitude which instantaneously attempts to correct the stead-state speed to the desired value. However, in printers where numerous different print head speeds are utilised, such a steady-state control method would be extremely difficult because of the large number of velocity references required and instability could result if sufficient processor bandwith is not utilised for velocity compensation.

The object of the present invention is to provide an improved apparatus and method for controlling the movement of the print head of a printer.

The present invention relates to a printer of the type which comprises a print head for performing printing operations on a print medium, a drive system for moving the print head across a print medium at a selected speed, and a print head control system. The control system includes generating means for generating print head movement signals corresponding to print head movement, and a processor, responsive to the print head movement signals and a command signal representing a required print head movement speed, to generate a drive signal for supplying to the drive system so as cause movement of the print head at the required speed.

According to the invention the printer is characterised in that the processor comprises means for repeatedly comparing the print head movement signals with the command signals at predetermined time intervals and for changing the drive signal by an equal amount, for each comparison operation that indicates that the print head movement speed differs from the command signal speed, until the print head attains the required speed.

The present invention also relates to a method of controlling the movement of the print head of a printer, of the type which comprises a print head for performing printing operations on a print medium, and a drive system for moving the print head across a print medium at a selected speed. The method comprises generating print head movement signals corresponding to print head movement, and generating, in response to the print head movement signals and to a command signal representing a required print head movement speed, a drive signal for supplying to the drive system so as cause movement of the print head at the required speed.

According to the invention the method is characterised in that the drive signal generation operation comprises repeatedly comparing the print head movement signals with the command signal at predetermined time intervals and changing the drive signal by an equal amount for each comparison operation that indicates that the print head movement speed differs from the command signal speed, until the print head attains the required speed.

The present invention employs a technique which incrementally adjusts the measured speed by equal amounts towards the desired speed during predetermined time intervals, rather than trying to instantaneously adjust the measured speed to the desired speed, and thus provides a suitable system for multispeed printer operation requiring a minimum of micro-processor bandwith.

In order that the invention may be more readily understood, an embodiment will be described with reference to the accompanying drawings, in which:

Figure 1 is a block diagram of print head motor control system according to the present invention,

Figure 2 is a schematic diagram of a decoder utilised in the control system of Figure 1,

Figure 3 is a series of graphs Figures 3a to 3e illustrating print head speed and voltage requirement for the print head drive motor of the control system of Figure 1,

Figure 3a is the velocity profile for the print head,

Figure 3b is a graph of the voltage representing the IR drop of the print head motor,

Figure 3c is a graph of the voltage necessary to overcome the friction component of the print head motor, the polarity of which will be determined by the direction of motion as shown;

Figure 3d is a graph of the voltage necessary to overcome the back Emf term of the print head motor,

Figure 3e is a graph of the total voltage necessary to drive the print head,

Figure 4 comprises two figures, Figures 4a and 4b, relating to a timer/counter utilised in the control system of Figure 1,

Figure 4a is a block diagram of the timer/counter,

Figure 4b is a graph of the pulse width modulation signal waveform generated by the timer/counter,

Figure 5 is a series of schematic drawings, Figures 5a to 5d representing the different modes of operation of an H driver circuit utilised in the control system of Figure 1,

Figure 6 is a graph of the pulse width modulation signal waveform output from a decoder in the a control system of Figure 1 during a transition mode of operation of the print head motor,

Figure 7 is a block diagram of the interface circuitry between a head control microcomputer and a mechanism control microcomputer utilised in the control system of Figure 1;

Figure 8 is a graph illustrating a high speed parameter calculation process when the print head is moving from right to left,

Figure 9 is a graph illustrating a high speed parameter calculation process when the print head is moving from left to right,

Figure 10 is a graph of a low speed parameter calculation process when the print head is moving from right to left,

Figure 11 is a graph of a low speed parameter calculation process when the print head is moving from left to right,

Figure 12 is a graph illustrating how the slope constant and motor friction voltage value are determined,

Figure 13 is a graph illustrating a process of derivation of the various drive voltages necessary to start the print head motor, maintain the motor at a steady state velocity and stop the motor,

Figure 14 is a graph illustrating a high speed acceleration process,

Figure 15 is a graph illustrating a high speed deceleration process, and

Figure 16 is a graph illustrating a turnaround process.

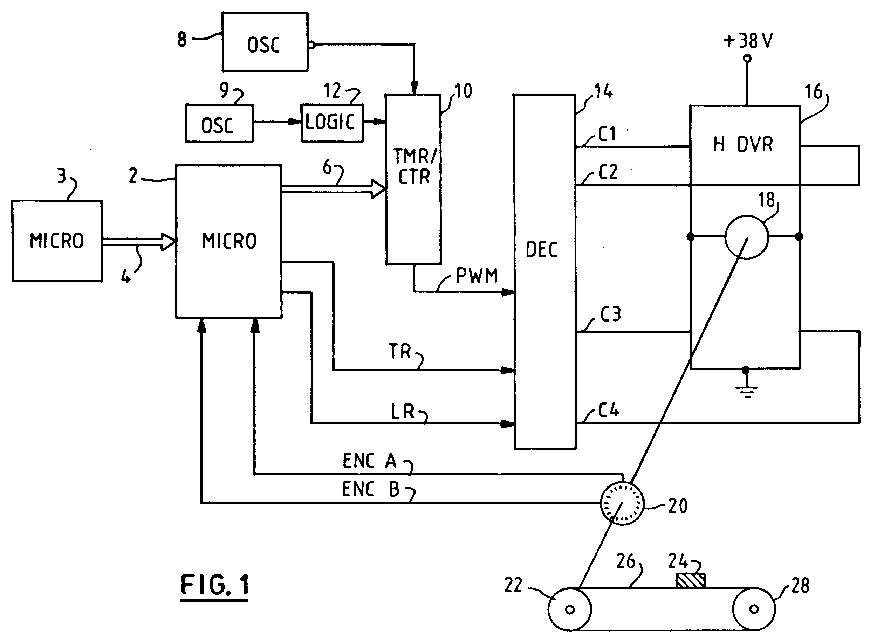

Referring now to Figure 1, a print head motor control system for a printer including a print head which moves across a print medium at various speeds comprises a head control microcomputer 2 which is connected to a mechanism control microcomputer 3 via command lines 4. The head control microcomputer 2 is also connected via line 6 to a timer/counter 10. The timer/counter 10 is also connected to a 7.5 MHz clock/oscillator 8 and to a divider logic unit 12 which is used to divide a 12 MHz signal from an oscillator 9 down to a 25 kHz trigger signal for the timer/counter 10 which produces an output signal PWM. A decoder 14 has one of its inputs connected to the output of the timer/counter 10 and two additional inputs connected to the outputs of the head control microcomputer 2 which provide respectively a transition mode signal, TR and a left-right directional signal, LR to the decoder 14. The decoder 14 has four drive control outputs C1, C2, C3 and C4 which are connected to respective inputs of a standard H driver circuit 16 which is used to drive a brushtype DC motor 18. The DC motor drives an integral dual-channel incremental encoder 20 which generates two symmetrical signals, ENC A and ENC B, which are used in combination to provide print head velocity and direction information as will be described below, and which are supplied back to respective inputs of the head control microcomputer 2 on two separate lines as illustrated. THe motor 18 is also mechanically connected to a pulley 22 which is used to drive the print head 24 of the printer. The print head 24 is mounted on a continuous belt 26 which is driven by the pulley 22 and is guided by a second pulley 28.

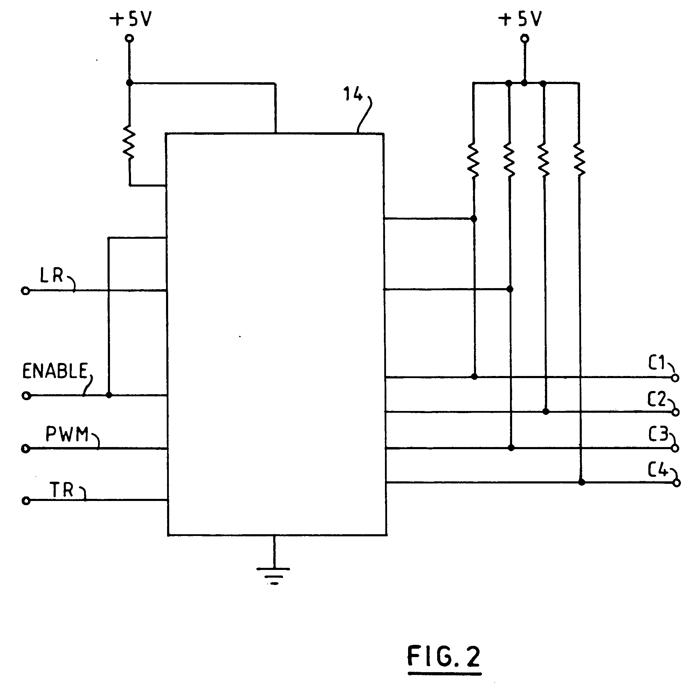

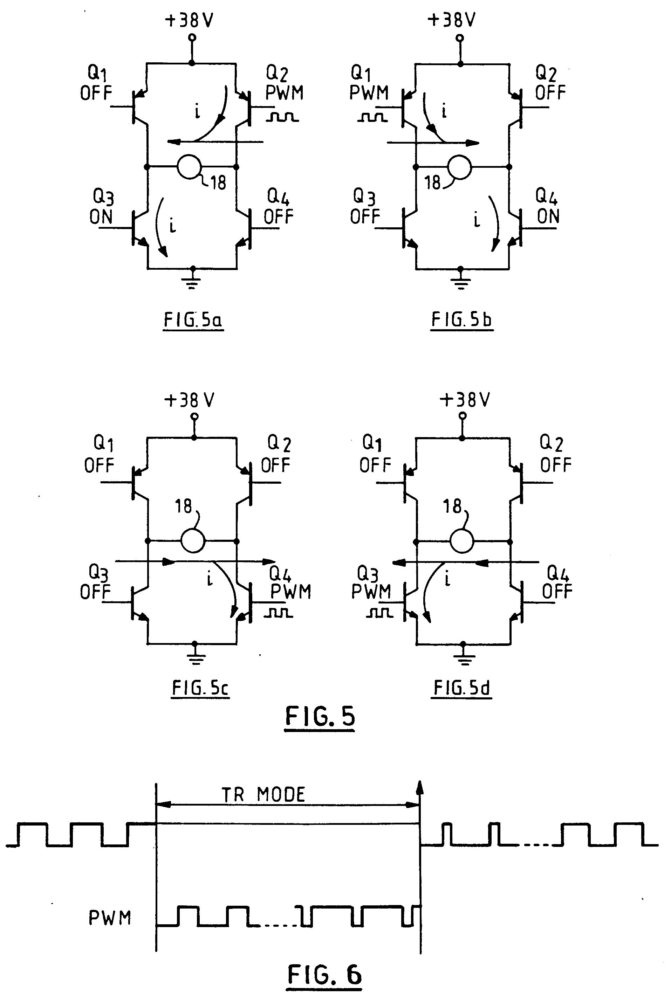

In a preferred embodiment, the head control microcomputer 2 is an Intel 8031 with 8K of ROS; the logic unit 12 comprises 74LS90 and 74LS393 circuits; the timer/counter 10 is an Intel 8254 timer module; the decoder 14 is a 74156 multiplexor manufactured by Texas Instruments and has its outputs connected in the manner illustrated in Figure 2 to provide a custom 3-4 decoder; the H driver circuit 16 is illustrated in Figures 5a to 5d; the DC brush type motor 18 is a Clifton Precision Model JDH-2250-DF-1C with a Litton Model 72DBI-900-375-5-6M shaft encoder 20; and the mechanism control microcomputer 3 is an Intel 80188.

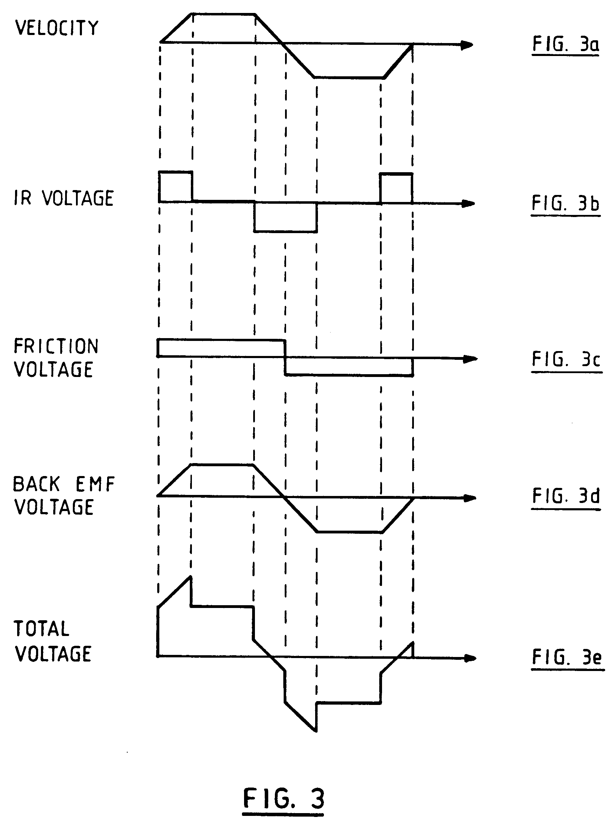

In operation, the head control microcomputer 2 receives print commands, print head run commands including direction information, and maximum print head speed commands from the mechanism control microcomputer 3. The head control microcomputer 2 determines the drive voltage required to obtain the desired steady-state print head speed based on the command information from the mechanism control microcomputer 3 and predetermined information about the print head motor 18 characteristics which will be explained in more detail hereinafter. For example, the voltage profile used by the head control microcomputer 2 to drive the DC motor 18 at high speeds is determined by summing the voltage required to overcome the internal resistance of the motor while accelerating or decelerating, the voltage required to overcome the frictional characteristics of the motor and the voltage required to overcome the back Emf and cause acceleration as illustrated respectively in Figures 3b, 3c and 3d. Thus, the total voltage required to drive the DC motor 18 at high speed in accordance with the velocity profile of Figure 3a is illustrated in Figure 3e.

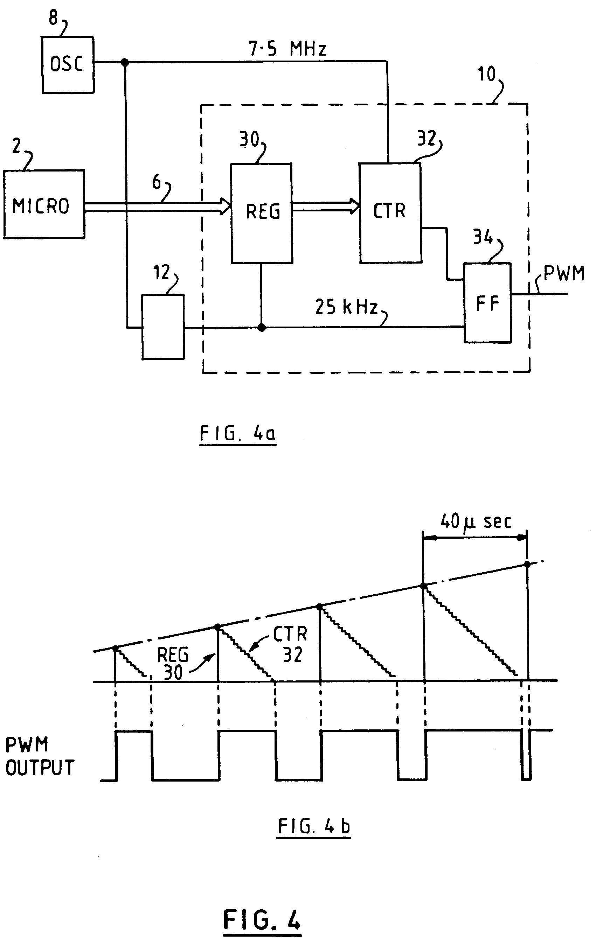

Based on the motion and speed command information from the mechanism control microcomputer 3 and the voltage vs. velocity characteristics of the particular motor 18, the head control microcomputer 2 determines the appropriate drive voltage for the motor 18 and generates a drive voltage value representative of the duration of time to apply the drive voltage to the DC motor 18. The drive voltage value is a number from 0 to 300, with 300 representing the application of 38 volts for 100% of the time period and lesser values representing the application of 38 volts for reduced time periods. The drive voltage value is converted into a pulse width modulation (PWM) signal by the timer/counter 10 and directed to the decoder 14 which is conjunction with the state of the transition region (TR) and left-right control lines (LR) determines the selection of the transistors receiving the applied voltage in the H driver circuit 16 (see Figure 5). The timer/counter 10 is used in single shot mode 3. A functional diagram of the timer/counter 10 is illustrated in Figure 4a.

Referring now to Figure 4a, the operation of the timer/counter 10 will be described in greater detail. The 7.5 MHz oscillator 8 generates a clock signal which is also directed to the input of the divider logic unit 12. The logic unit 12 generates a 25 kHz square wave used as a trigger to continually restart the timer running. The 25 kHz signal generates a fixed 40 microsecond period which is used to set a timer run flip flop 34 and to preset a down counter 32 with the output count value from the head control microcomputer 2 which is loaded into a count value register 30 every 40 microseconds. The 7.5 MHz clock signal decrements the down counter 32 and when this counter reaches zero, the timer run flip flop 34 is reset causing the timer/counter 10 output (PWM) to fall. The result is an output signal PWM having a constant period waveform with a duty cycle that can vary between 0 and 100 percent, depending upon the output count value from the head control microcomputer. This is illustrated in Figure 4b.

As mentioned above, the print head motor 18 is controlled by the H driver circuit 16 by way of outputs from the decoder 14. The truth table for the decoder 14 outputs (inputs to the H driver circuit) is illustrated below.

### HEAD MOTOR LOGIC TRUTH TABLE

P = Pulsing

X = Don't care

| ACTION | + RIGHT | + TRANS REGION | Q1 | Q2 | Q3 | Q4 |
|--------|---------|---------|-----|-----|-----|-----|
| | | | TRANSITION STATE | | | |
| Drv Left | 0 | 0 | Off | P | On | Off |
| TR Left | 0 | 1 | Off | Off | P | Off |
| Drv Rt | 1 | 0 | P | Off | Off | On |
| TR Rt | 1 | 1 | Off | Off | Off | P |
| Inactive | X | X | Off | Off | Off | Off |

Referring now to Figures 5a to 5d, the operation of the H driver circuit 16 will be explained. When the print head motor 18 is driving the print head 24 to the left, the right-left input line LR and the transition region input line TR to the decoder 14 are both inactive so that the transistor Q1 is turned off, the transistor Q2 is pulsing in accordance with the PWM signal from the timer/counter 10, the transistor Q3 is turned ON and the transistor Q4 is turned OFF. Thus, as can be seen in Figure 5a, a current path i is set up from the 38 volt reference voltage source through the transistor Q2, the motor 18 and the transistor Q3 to ground. The duty cycle of the PWM signal being supplied to the transistor Q2 determines how long the Q2

4

transistor is turned ON and thus regulates the time period for which the reference voltage is used to drive the motor 18. On the other hand, if the print head motor 18 is driving the print head 24 to the right, the left-right input line LR from the head control microcomputer 2 will be active and the transition region signal line TR from the head control microcomputer 2 will be inactive. The transistor Q1 will be pulsing at a rate determined by the PWM signal from the timer/counter 10, the transistors Q2 and Q3 will be turned OFF and the transistor Q4 will be turned ON. Thus, as can be seen in Figure 5b, a current path i is set up from the reference voltage source through the transistor Q1, the motor 18 and the transistor Q4 , to ground, the current flowing in an opposite direction through the motor as compared with when the motor was being driven to the left. Again, the duty cycle of the PWM signal determines how long the Q1 transistor is turned ON and therefore regulates the time period the reference voltage is being used to drive the motor 18 and thus regulates the speed of the motor.

Different requirements are necessary when the print head motor 18 is in the transition mode. The transition mode is when only one transistor is actively pulsing with all other transistors turned OFF. The motor 18 is in this mode when stopping from high speed and when the steady state drive voltage value is greater than the internal resistance voltage value. The transition mode continues until the voltage value when stopping reaches zero. At that point, drive is applied to two transistors, either Q1 and Q4 or Q2 and Q3, with the top transistor pulsing (either Q1 or A2) and the bottom transistor (either Q4 or Q3) turned ON.

The voltage values used in the head control microcomputer 2 are 2's complement numbers with a positive value indicating that the print head is to be driven to the right and a negative number indicating that the print is to be driven to the left. The timer/counter 10 never sees the negative numbers because the head control microcomputer 2 generates the absolute value of each number for sending to the timer/counter and the signal on the left/right direction control line LR determines whether the effective number is positive or negative.

During the transition mode, the complement of the voltage is generated because the function of the decoder 14 is not to supply a voltage during that time period but to regulate the release of current from the motor 18. This regulation is performed by gradually increasing the current flow from the motor 18 as it slows down. The object is to obtain an average constant current while decelerating, instead of a large amount of current being released when deceleration is begun and then very little current being released thereafter. THus, the use of large transistors is not required for high currents and a controlled deceleration without feedback is accomplished.

This action is illustrated in Figure 6 wherein the modulator signal PWM as it comes out of the decoder 14 is shown. It should be understood that the PWM signal is complemented while in the transition mode (TR mode). Also the pulse width is increasing in the transition mode from a moderate to a large value. After the transition mode is completed, the pulse width starts out small and increases from three.

More specifically, as shown in Figure 5c, when the print head 24 is in the transition mode and moving from left to right, only the transistor Q4 is being driven by the PWM signal. This enables current from the motor 18 to be released in a controlled manner resulting in an average constant current while stopping. Transistor Q4 is pulsed until the voltage value used in pulsing is decreased to 0. The PWM signal is then applied to the upper transistor Q1.

Finally, referring to Figure 5d, when the print head is in the transition mode and moving from right to left, the left-right control line LR from the head control microcomputer 2 and the transition region signal line TR are such that the transistor Q1 is turned OFF, the transistor Q2 is turned OFF, the transistor Q3 is pulsing with the PWM signal and the transistor Q4 is turned OFF. The pulsing transistor Q3 provides a path for the current in the motor 18 to be dissipated in a controlled manner, resulting in an average constant current while stopping. Transistor Q3 is pulsed until the voltage value used in pulsing is decreased to 0. The PWM signal is then applied to the upper transistor Q1.

The print head motor 18 also includes an integral dual channel incremental rotary optical encoder 20 which is used for velocity and direction sensing as well as providing print head position information for the control of the firing of the print head actuators in the print head (not shown). The rotary optical encoder 20 generates two square wave output signals ENC A and ENC B which are supplied to the head control microcomputer 2. These encoder signals are identical except there is a 90° phase shift between the two signals. Each square wave cycle in the signals corresponds to the movement of the print head through a distance of 1/300 of an inch ($0.85 \times 10^{-4}$ m). The faster the movement of the print head, the shorter the time duration of each square wave cycle. The head control microcomputer 2 counts the number of pulses ENC A and ENC B from the incremental encoder 20 and thus is able to monitor the head position and direction of motion of the print head 24 as it moves back and forth across the printing medium.

While the print head 24 is moving at a steady-state speed, the head control microcomputer 2 measures this speed and incrementally adjusts the output count value from the microcomputer 2 representing the appropriate motor drive voltage to maintain an average desired steady-state speed. It should be understood that the print head motor control system supports, in a preferred embodiment, speeds from 3.0 in per second to 40 in per second in steps of 1/6 in per second ($7.62 \times 10^{-2}$m per second to $101.6 \times 10^{-2}$m per second in steps of $0.425 \times 10^{-2}$m). In order to operate satisfactorily, the speed range for the system has been divided into two groups, namely those less than 10 in ($25.4 \times 10^{-2}$m) per second and those speeds that are greater than or equal to 10 in ($25.4 \times 10^{-2}$m) seconds.

For the higher speed group, the number of cycles in the encoder signals ENC A and ENC B transmitted to the head control microcomputer 2 as pulses in a 16 millisecond time period is measured at the steady-state speed. The number of encoder pulses that should be received during each 16 millisecond time period is determined by the head control microcomputer 2 and the two numbers are then compared to see if the measured distance value (distance moved by the print head) is larger or smaller than the desired value. If the measured distance value is too large, then the drive signal to the motor 18 is decreased by one least significant bit of the output count value being supplied at the output of the head control microcomputer 2 to the timer counter 10. The location in the microcomputer memory that stores the drive value for the left or right direction signal is also decremented by one least significant bit. However, if the measured distance value is smaller than the desired value, the output count value and the stored value are increased by one least significant bit. The process is repeated every 16 milliseconds until the print head stopping procedure begins.

The output count value which remains at the end of the print line is saved and used as the initial output count value the next time the print head is moving in the same direction, providing the speed command from the mechanism control microcomputer 2 is not changed. If the speed command from the mechanism control microcomputer is changed, then this output count value is erased and is replaced by a calculated estimate for then new speed. It should be understood that a different output count value is saved for each direction of movement of the print head to account for mechanical differences in the motor and mechanism.

For the lower speed group, the time between successive encoder cycles from the incremental encoder 20 is much larger than the time between such cycles for the higher speeds and, thus, a smaller number of cycles are received from the encoder 20 during each 16 millisecond monitoring time interval at lower speeds. Thus, the obtainable resolution for the lower speeds is substantially decreased. Therefore, it is necessary to measure the time between successive encoder cycles received during the 16 millisecond period and transmitted to the microcomputer 2 as a pulse having a pulse width reflective of the time between successive encoder cycles. Additionally, this requires that the head microcomputer 2 calculate the desired time between the encoder cycles (desired pulse width) based on the current speed for comparison with the actual measured value. Then, in a manner similar to that used for the high speed group, if the measured time between successive encoder cycles is larger than the desired value, then the output count value is incremented by one least significant bit and the microcomputer memory location that stores the output count value is also incremented. This results in the drive voltage to the motor 18 being applied for longer periods of time. If the measured time between successive encoder cycles is less than the calculated value then the output count value is decremented by one least significant bit resulting in the motor drive voltage being applied for shorter periods of time and is saved in memory. The process is repeated every 16 milliseconds until a print line is complete.

A detailed operation of the head control microcomputer 2 will be explained hereinafter. As mentioned earlier, the microcomputer 2 receives print commands, run commands and maximum print speed commands from the mechanism control computer 3.

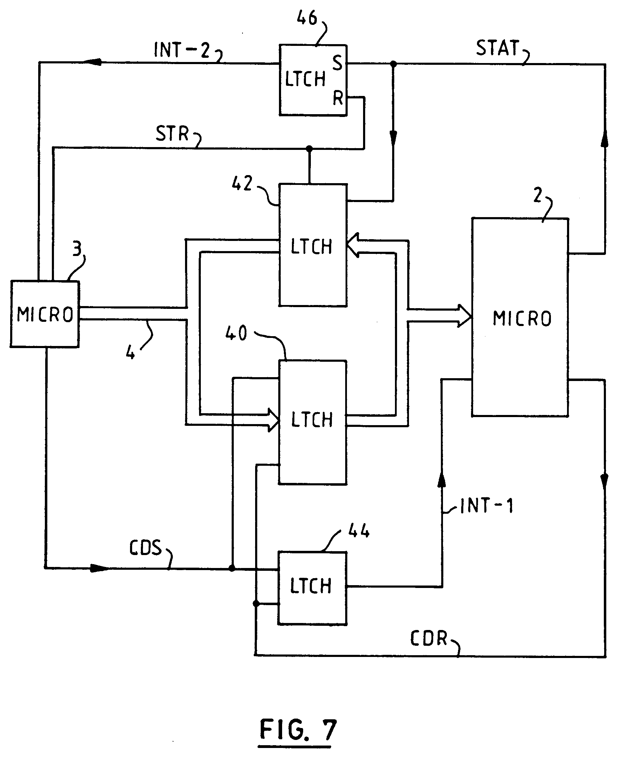

Referring now to Figure 7, it should be understood that the control system being described uses conventional hardware typically required for the passing of a single command byte between processors. The system comprises an eight bit latch 40 containing commands from the mechanism control microcomputer 3 and an eight bit latch 42 containing status information supplied from the head control microcomputer 2. The mechanism control microcomputer 3 places a byte CDS in the command latch 40. This action sets active a separate latch 44 which supplies an interrupt signal INT-1 to the head control microcomputer 2 which then reads the data, resetting the interrupt. The head control microcomputer 2 sends status information STAT back to the mechanism control microcomputer 3 by setting the data in the status latches 42 and setting a separate latch 46 which supplies an interrupt INT-2 to the mechanism control microcomputer 3 on receipt of a status read signal STR.

Each command may comprise one to eight bytes. For each byte sent by the mechanism control microcomputer 3, the head control microcomputer 2 responds that the byte was received. Once the complete command is received (all the command dependent bytes are received), the head control microcomputer 2 then performs the desired action and, upon completion of the command, the final response byte is returned. For example, when the mechanism control microcomputer 3 sends a four byte command to the head control microcomputer 2, it sends the first byte and waits for the head control microcomputer 2 to respond with a status byte signal indicating that the first byte was received. Once the response byte signal has been received, then the second byte is sent. Again, the head control microcomputer 2 responds with a status signal indicating the second byte has been received. This process is continued until the last byte has been sent. The head control microcomputer 2 then acts on the command and the final response byte signal is sent back to the mechanism control microcomputer indicating completion or error status. The number of bytes per command and the information returned is dependent only on the command function defined. The command function and the number of bytes is determined by the first byte of the command. This first byte is decoded as follows:

## COMMAND BYTE DECODE

| MB | EXR | D5 | D4 | D3 | DB2 | DB1 | DB0 |
|----|-----|----|----|----|-----|-----|-----|

-MB- This bit will be ON if the command is a multi-byte command and OFF if it is a single byte command.

-EXR- THis bit will be ON if the last (or only) response byte sent back to the mechanism control microcomputer is not the standard response indicating successful completion or error status (Status Byte 1).

-D5, D4, D3, DB2, DB1, DB0- These are the command decode bits within the groups defined. For multi-byte commands the number of data bytes following the command byte is given by the bits DB2, DB1, and DB0.

The high order bit indicates whether the command is a multi-byte or a single byte command. The second bit indicates whether a standard status response (called 'status byte 1') is given to indicate command completion or if the exception response bit is ON, indicating the response is some data information. The next three bits are used to identify commands uniquely (decode them). The last three bits have two different meanings. If the command is a multi-byte command (containing up to seven additional bytes) these three bits identify the number of remaining bytes in the command. This information is used in the head control microcomputer 2 to determine when the complete command has been loaded and processing can proceed. If the command is not a multi-bye command (the high order bit is 0) these low three low order bits are simply used as further command decode. For all multi-byte commands the response 'FF' indicates that a byte has been received and 'SB1' indicates the response to the last byte of a multi-byte command is 'Status Byte 1' which contains uniquely defined error bits. A response of '00' for Status Byte 1 indicates successful command completion.

The command decode process will now be described. Whenever a command is expected, a command length register that will indicate the length of the command is set to zero. The first byte of a command received identifies the command as a multi-byte command if the appropriate bit of the command byte is ON. If the command is a multi-byte command, the command length as read in the lower bits of the command byte is stored in the command length register. A status signal of 'FF' is supplied to the mechanism control microcomputer 3 to indicate that the first byte has been received and the head control microcomputer 2 is ready for more information.

After one byte has been processed, the command decode process is interrupted and is recommenced when the next byte is received. If the command length register value is not zero, then additional bytes are expected for this command. For each byte collected, the head control microcomputer 2 supplies a byte received status signal of 'FF' and decrements the command length register. If the command length register value equals zero after decrementing, then the byte just received is the last byte expected for this command and the command execution begins. All the information received on the command has been saved byte by byte.

It should further be understood that, after 'power-up' of the control system, the head control microcomputer 2 first determines voltage vs velocity parameters and frictional voltage equivalent parameters which are used to generate the proper motor drive voltage value for any desired speed. The head control microcomputer 2 generates its own sub-commands that initiate special motion commands. These commands are initiated by a 'calculate parameters command' from the mechanism control microcomputer 3 which is decoded in the process described above.

The automatic calculation of the parameters used to generate the appropriate motor drive voltage values for a desired speed will now be described. Before any measurements an calculations are made, the head control microcomputer 2 first determines a starting location to begin counting signals from the encoder 20. The motor 18 is first driven until the print head contacts the left side frame of the printer. The motor 18 then drives the print head slowly until the print head contacts the right side frame. This enables the microcomputer 2 to ensure that the print head 24 has travelled the full width of the printer without mechanical impairment.

A sub-command is then generated requesting motion at 40 in/sec to the left. The standard command decode sequence is initiated as described above as well as the standard acceleration which is explained in greater detail hereinafter. Once the steady state speed is reached a steady state drive voltage value is supplied by the microcomputer 2. This value which represents the initial estimate of a voltage predicted to cause a velocity of 40 in/sec is initially determined by the power-on default values of the friction and voltage vs velocity (slope) constants. In a preferred embodiment this default voltage is calculated as follows:-

(1)    Default voltage = (default slope constant value * desired speed value/256) + friction constant value

where friction constant value = 32;
slope constant value = 152;
desired speed value = 6 × desired velocity = 6 × 40 = 240;
and more specifically is of the form:

(1A)    Voltage value = (K * desired speed value) + friction voltage equivalent

where K is the value which represents the relationship (ratio) between voltage and velocity changes and the frictional voltage equivalent represents the voltage required in the system to overcome the effects of friction in impeding motion. The magnitudes of these two values will be the result of the measurements and calculations to be performed in the following procedures.

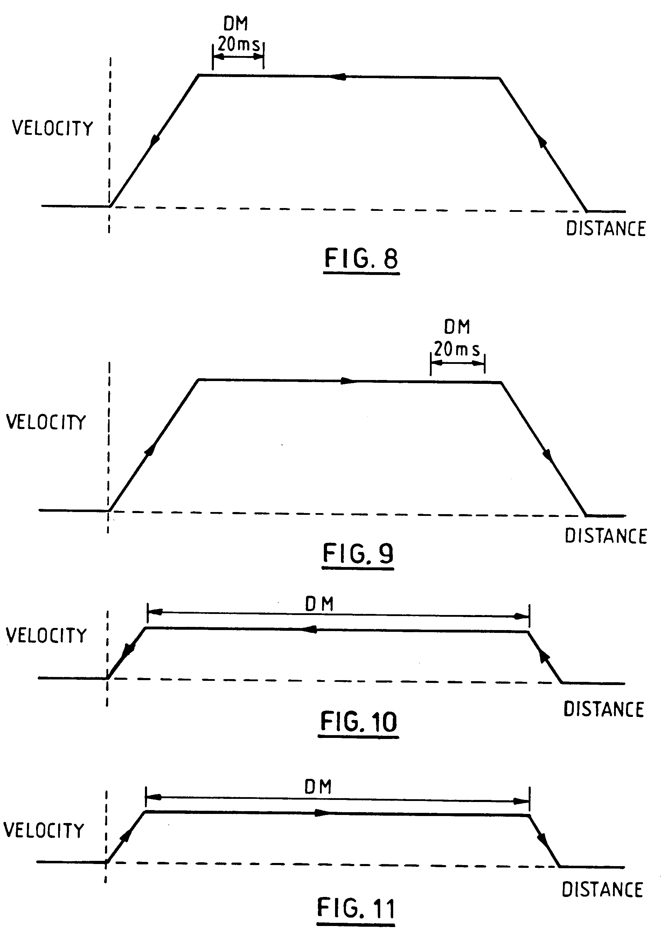

Initially, these values are given pre-defined values so as to ensure there will be print head motion to permit measurements to begin. Speed correction is disabled so that this voltage will be used for the entire line. The initial physical position of the print head is saved and a measurement is made of the distance travelled in 20 milliseconds. This measurement is made continually while the print head is travelling across the printer with the last distance measurement made (the final 20 ms period before stopping) being saved. When the steady state motion ends, deceleration occurs in a manner which will be explained in more detail hereinafter. The velocity in this last 20 ms of the steady state period before deceleration is calculated and saved for use later. The velocity is in general not 40 in/sec. The measured velocity reflects the effects of the applied constant voltage. If only one 40 in/sec motion has been performed, then the direction of motion is set to go right and motion is again begun. The same testing procedure is followed for high speed motion to the right. The velocity in the last 20 ms steady state period when moving to the right is saved after calculation. Figures 8 and 9 illustrate this procedure graphically.

Next, the voltage value required for lower speed motion is calculated for a speed value of 10 in/sec. The steady state default voltage value is again calculated using equation (1), except that the desired speed value is now 6 × 10 in/sec = 60. When acceleration is complete, the calculated steady state voltage value is supplied. Speed correction is disabled so that this voltage will be used for motion across the entire width of the printer. THe initial physical position is saved and a loop counter used to count the number of 80 ms loops is incremented. This measurement is done for the entire length of the line. When the steady state motion ends, standard deceleration occurs. THe average velocity for the entire motion (DM) is calculated and saved for use later. If only one 10 in/sec motion has been performed, then the direction of motion is set to go right and another motion at low speed is initiated. The same testing procedure is followed for motion to the right, with the velocity moving to the right saved after calculation. Figures 10 and 11, illustrate this procedure graphically.

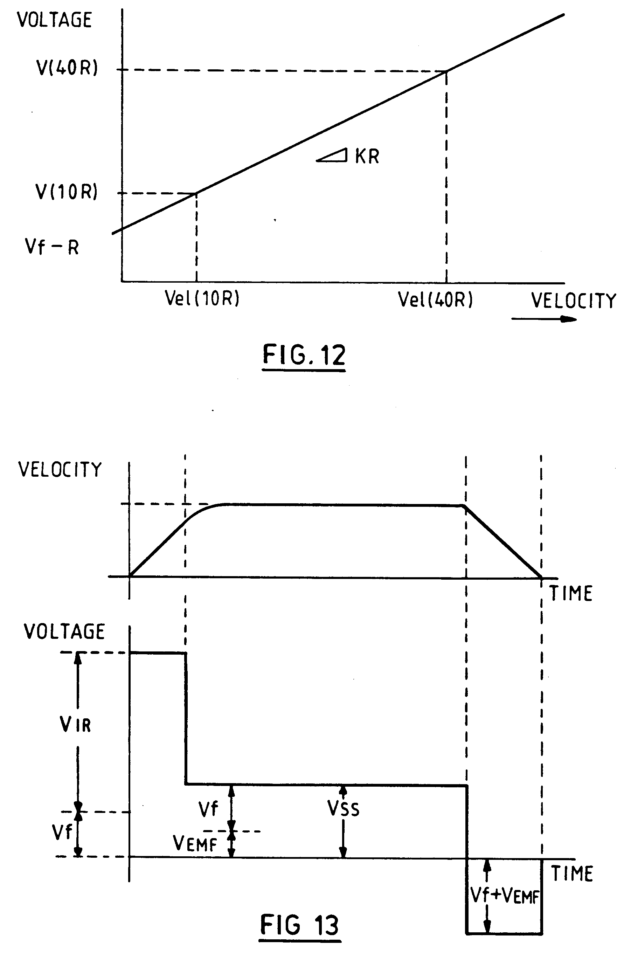

In the drive voltage value parameter calculations a different voltage vs. velocity relationship constant is calculated for motion in each direction. The voltage vs. velocity constants for both directions are calculated by determining the slope of the line between two points in a voltage vs. velocity graph as shown in Figure 12. These points are defined as the measured velocity vs. voltage at the two different speeds for each direction. These constants may then be used to select the proper steady state voltage for a desired velocity in the selected direction. The y-axis intercept of the voltage vs. velocity curve is the voltage required to overcome the frictional effects of the system and initiate motion as illustrated in Figure 12. There are different frictional values for each direction as well. These values are predetermined by choosing a point on the voltage vs. velocity curve and then calculating the intercept. The point chosen is the 10 inch/second value for each direction which is already known. First, the voltage vs. velocity constant for movement to the right (KR) is calculated as follows:-

$$(2) \quad KR = \frac{V(40R) - V(10R)}{Vel(40R) - Vel(10R)}$$

where

V(40R) = steady state voltage value for moving right at about 40 in/sec (high speed);

V(10R) = steady state voltage value for moving right at about 10 in/sec (low speed);

Vel (40R) = measured high speed velocity when moving right;

Vel (10R) = measured low speed velocity when moving right;

Next, the voltage vs. velocity constant for movement to the left (KL) is calculated as follows:-

$$(3) \quad KL = \frac{V(40L) - V(10L)}{Vel(40L) - Vel(10L)}$$

where

V(40L) = steady state voltage value for moving left at about 40 in/sec;

V(10L) = steady state voltage value for moving left at about 10 in/sec;

Vel(40L) = measured high speed velocity when moving left;

Vel(10L) = measured low speed velocity when moving left.

Next the friction voltage equivalent for motion to the right (Vf-R) is calculated as follows:

(4)     Vf-R = V(10R) - (KR × 10 in/sec)

where

V(10R) = steady state voltage value for moving right at about 10 in/sec;

KR = voltage vs. velocity constant for movement to the right, calculated as described above.

Finally, the friction voltage equivalent value for motion to the left (Vf-L) is calculated as follows:-

(5)     Vf-L = V(10L) - (KL × 10 in/sec)

where

V(10L) = steady state voltage value for moving left at about 10 in/sec;

KL = voltage vs. velocity constant for movement to the left, calculated as described above.

Once these calculations for the voltage vs. velocity constants, (KR, KL) and frictional voltage equivalents, (Vf-R, Vf-L) have been made, these values are used in calculations to determine the steady state voltage of motion where the speed value has changed and for low speeds using equation (1A).

A data request command is performed when requested and is the mechanism for the head control microcomputer 2 to pass information back to the mechanism control microcomputer 3 when requested. For example, the head position information, indicating the physical distance of the print head from the side frame in encoder units (1/300 inch per encoder unit) may be passed back to the mechanism control microcomputer 3 by using two separate data request decodes, passing back 8 bits at a time.

The motion speed selection processes for a print command and a run command, respectively, will now be described. Print commands that are received are of the form 'Print from XXXX.XX to XXX', where the term XXXX.XX indicates the whole and fractional value of the output from the encoder 20 where the print head is in the position when the printing is to be started and YYYY indicates the value of this output from the encoder 20 in units when the print head is in the position where the printing is to end. This implies a direction of print head motion but does not determine the desired speed. The maximum allowable speed for the desired print density is sent to the head control microcomputer 2 from the mechanism control microcomputer 3 in a separate command. The head control microprocessor 2 begins speed calculation by determining the total motion distance required for a command. This distance is calculated by subtracting the current or projected zero velocity location from the previous or current motion command to the desired new stop location for a run or print command. For a print command or restricted run command the head control microcomputer 2 uses a preselected speed value from the mechanism control microcomputer 3 as the initial trial speed value. For a run command the trial value is the 40 in/sec speed value. The head control microcomputer 2 uses the speed value to first calculated the stopping distance from that speed using the following formula:

Assuming a deceleration rate of 600/in/sec/sec

(6)     Distance = (Velocity × Velocity)/ (2 × acceleration)

Further assuming that the units are chosen such that the velocity is expressed in units that are six times the velocity (in in/sec), the stop distance (in number of units from the encoder 20) is calculated as follows:-

(7)     Stop Distance = $(Speed\ Value)^2/144$

The stop distance value is then multiplied by 2.5. This result is compared with the total desired distance to be moved. If the value of 2.5 times the stopping distance is less than the total distance to be moved then the specified speed is used. Otherwise the specified speed is divided in half and the stopping distance and total movement distance for this new speed is calculated. The stop distance value is then multiplied by 2.5 and compared with the new trial movement distance and the velocity value accepted if the trial movement distance is less than the total actual distance to be moved.

This iterative process is repeated until a speed is selected or the velocity value gets less than 5 in/sec at which time the 5 in/sec value is used. Once the desired velocity has been selected, then motion status indicators are set indicating speed and direction information. If the speed value indicates that the desired velocity is less than 10 in/sec then the low speed algorithm is used. If the speed value indicates that the desired velocity is 10 in/sec or greater, then the high speed algorithm is used. THus, the effect of this algorithm is to reduce the desired velocity value whenever the distances to be travelled are small.

For run commands of the type 'Run till ZZZZ', the command form indicates that the motion is to be performed by moving the head from the current location (if no motion is taking place) or from the location that the head will be in when the velocity reaches zero after completing the currently active motion (the predicted stop location). Motion is to take place at the fastest speed possible to minimise the time required to complete the motion. This speed is based on the distance to be travelled with faster motion associated with longer distances. Since there will be no printing associated with a run command the initial desired speed is the maximum defined speed for the system.

The distance to be travelled is calculated by subtracting the current or next stopping location from the desired end run position (ZZZ). This distance is compared with 2.5 times the stopping distance for the currently defined speed. If 2.5 times the stopping distance is less than the motion distance, then status is et and motion is initiated at either high or low speed based on the final distance selected. If 2.5 times the stopping distance is greater than the motion distance, then a new run speed is selected by dividing the previous value by 2. Comparison is then performed again and the cycle is repeated until 2.5 times the stopping distance is greater than the movement distance or a minimum velocity of 5 in/sec is reached.

Print head motion control at low speeds will now be described with reference to Figure 13. Low speed motion is defined as motion at velocities less than ten inches/second and is initiated by applying a constant drive voltage to the motor. The drive voltage value is first calculated by adding the friction drive voltage component Vf and motor internal resistance drive voltage component VIR of the motor as graphically illustrated in Figure 13. These voltage components are determined by the techniques described above. The drive voltage is applied for different periods of time depending on the final desired velocity, by counting a number of signals from the encoder 20 (Figure 1). The necessary number of encoder signals to be counted is calculated by multiplying the calculated nominal stopping distance value (velocity squared /4) by a fraction of 3/4. When the desired number of encoder signals has been counted the drive voltage is reduced to a steady-state value VSS, as illustrated in Figure 13. This acceleration period permits the application of the drive voltage for a time which may vary based on the time it takes to move the desired distance and in that respect the drive is responsive to the system. But the drive retains its open loop character with no requirements of velocity monitoring and correction during acceleration.

The low speed steady-state operation of the print head motor will now be described with reference to Figure 13. The drive voltage applied at steady-state is calculated by adding the average frictional drive voltage term Vf to the calculated drive Emf value VEMF (the calculated drive value times the slope term K which is explained elsewhere herein, see equation 1A, above) to give the voltage VSS required to maintain the drive at a constant velocity (See Figure 13). (Different Emf and friction values are kept for the left and right directions and the slope value relates the drive voltage to the desired velocity as explained earlier herein.) This voltage is applied after acceleration is completed which is usually just before the desired steady state velocity is reached. For low speeds the time between successive encoder signals is such that a small number of signals are received in the sixteen millisecond sampling period. Therefore, the individual encoder signal time is measured instead of the number of signals per sampling time. The time per signal must be calculated based on the current velocity for comparison with the measured value. These two numbers are compared and if the measured value is larger than the desired value then the drive signal value to the motor is increased by one lowest significant bit of the drive number byte. The location in memory that saves the drive value is also increased by one lowest significant bit. If the measured value is smaller than the calculated value then the drive signal value is decreased by one lowest significant bit and also the drive value in memory. This same procedure continues, repeating the measurement and calculations every 16 ms until the head begins stopping. The time per encoder signal is calculated by multiplying the number of encoder signals per inch (300) times the velocity and taking the inverse. When scaled, this equation reduces to the following division:

$$(8) \quad \textbf{Time/Encoder Signal} = \frac{\textbf{20,000}}{\textbf{Speed Value}}$$

where Speed Value = 6 × desired velocity (in in/sec).

The drive value which remains at the end of the motion across the printer is not used as is done in the high speed mode because the variation in mechanical friction across the line is reflected to a much greater extend tin low speed operation and makes the drive values subject to error.

The procedure for adjusting for low velocity overshoot will now be described. At zero velocity the desired time between encoder signals is calculated and saved, but is not used for low speeds. When speed compensation is enabled an overspeed value is calculated and saved. The overspeed value represents the encoder signal time for a velocity of 1 and 1/16th of the desired velocity. The encoder signal time value register contains the current encoder signal time and when this value is smaller than the overspeed value the velocity is six percent overspeed. The current encoder signal time value is compared with the overspeed value during the 16 ms test period while in the steady state operation. Whenever the comparison indicates the velocity is more than six percent overspeed, the total drive voltage is cut in half. When the velocity decreases to the point where the encoder signal time indicates that the velocity is now less than six percent overspeed, the current drive voltage is restored to the current standard value. If it is time to begin stopping, the head control microcomputer 2 begins the decelerating routine which will be explained more fully hereinafter, otherwise it returns to the 16 milliseconds test period routine described above.

The deceleration routine will no be described with reference to Figure 13. Deceleration from a low speed is accomplished by simply applying a voltage equal to the current steady state value VSS in the opposite direction. Polarity is reversed by changing the logic level of the LR line from head control microcomputer 2 (Figure 1) and by supplying the complement of the current drive voltage value from the head control microcomputer over line 6 to the timer/counter 10. This value is supplied until the time between encoder signal changes reduces to a minimum value or until the encoder signal sequence reverses. When either one of these two events occurs, the head will be said to be at zero velocity and the drive will be shut off.

As mentioned earlier, when printing is to be performed the mechanism control microcomputer 3 must have previously sent a set print speed command to the head control microcomputer 2. This command fixes the maximum print head speed while the actual print head speed is selected by the head control microcomputer. THis desired speed value is saved while waiting for the current command to be completed. When the run command is initiated, the desired speed value is used as the run speed. At 'power on' or when the printer cover was last closed, the head control microcomputer 2 calculated several values which represent the frictional characteristics of the machine and slope constant values which relate the drive voltage to a desired velocity. The frictional value represents the voltage required to overcome the average frictional effects of the machine. A separate value is calculated and maintained for each direction of movement of the head. The values are used as part of the calculation of the drive voltages applied to the motor. The other values which were calculated are the 'slope constant' terms which relate a desired velocity to the voltage required to achieve that velocity by the following formula:-

(9)    Voltage = (Slope Constant * Velocity) + Frictional Voltage Equivalent

There are two slope values, one for movement in the right direction and one for movement in the left direction. The voltage value that results is the voltage that is required to move the head at the steady state speed desired and is called the steady state drive voltage term (VSS). This drive voltage term represents the voltage applied to the motor and is different from the above calculation when accelerating and decelerating. The above equation expresses the means by which the drive voltage value is calculated whenever the desired print head speed has changed. When the speed for a command has not changed from the previous command then the steady-state drive value is not calculated, but the last value used in that same direction is then used as a better estimate of the desired drive value.

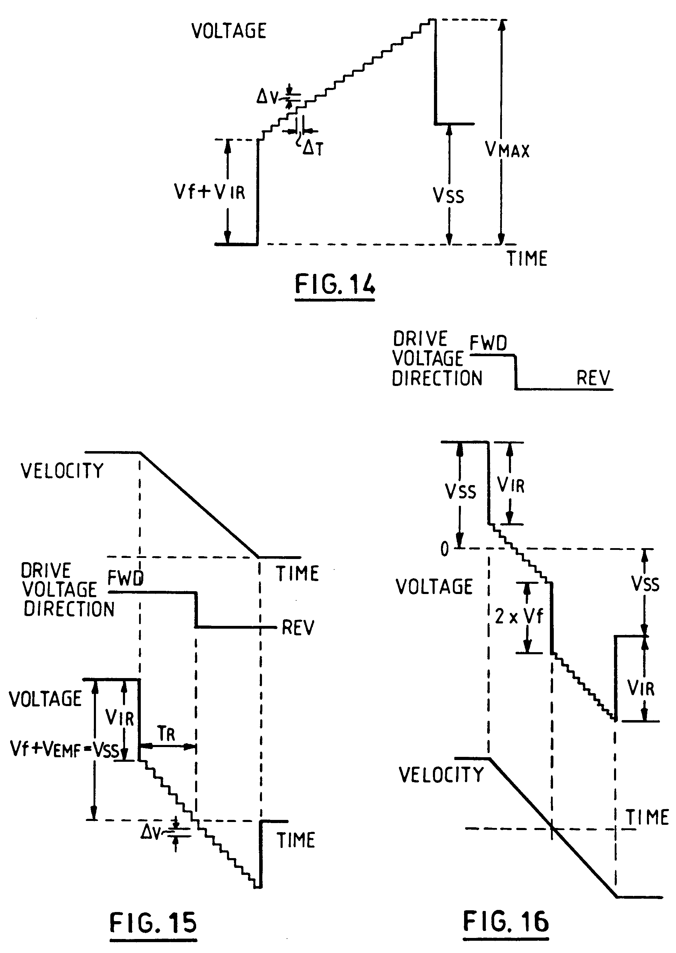

The high speed acceleration process will now be described with reference to Figure 14. The high speed mode of operation covers velocities from 10 in/sec up to 40 in/sec and comprises an open loop acceleration period in which the drive voltage is set to a value initially and is increased to a final value in steps (See Figure 14) one bit at a time at each interrupt time. The time between voltage changes while accelerating is typically between 350 and 450 microseconds depending on the voltage count value remaining from the previous direction of motion and the predicted steady state voltage value for the new direction of motion and is determined by the following equation:

$$(10)\quad \Delta T = \frac{(Vel/40)*.133\ sec}{VC1 + VC2}$$

where,

VEL =    desired velocity,

VC1 =    count value of motor drive signal from head control microcomputer for steady-state voltage for right direction motion,

VC2 =    count value of motor drive signal from head control microcomputer for steady state voltage for left direction motion,

40 =    40 in/sec maximum velocity,

.133 =    turnaround time for 40 in/sec motion.

The voltage values used during acceleration increase from the initial value VIR in steps of $\Delta V$ until a final value V MAX is reached. Then, the interrupts that were used to determine when to change the voltage value are shut off and the drive voltage is then reduced to a steady-state drive value VSS and velocity correction commences. The initial drive voltage is the sum of the friction term Vf and another term called the VIR term which represents the extra voltage required to overcome the internal resistance of the motor. The VIR term is a constant based on the motor characteristics and load parameters and in the preferred embodiment has a value of 96. This term is present for the entire acceleration time.

Starting from the sum value of the frictional term and the IR term, an additional amount $\Delta V$ is added thereto at predetermined intervals $\Delta T$. The motor drive voltage value is periodically increased (decreased to increase a negative value for movement to the left) at a rate determined by the time indicated in equation 10. This continues until the value reaches a maximum calculated value V max represented by the sum of the frictional value Vf, the "IR" value and the steady state drive term VSS. Once the final value is reached, the steady state drive voltage is set.

There is an alternative method of achieving steady state from an acceleration. THis is done by reaching the desired steady state velocity before the voltage values reach the desired maximum drive value. While accelerating, the head control microcomputer 2 monitors the time between successive encoder signals and compares the measured value with a calculated value representing the desired steady state velocity. If the time between successive encoder signals becomes less than or equal to the calculated value, the desired final velocity has been reached. This end criterion becomes extremely important when motion begins at speeds other than zero velocity.

High speed steady state velocity correction will now be described. Once the maximum drive value or desired velocity has been reached, the drive voltage output is set to the steady state voltage value VSS that is the sum of the frictional value Vf, plus the Emf voltage drive value V EMF as mentioned before.

The head control microcomputer 2 counts the number of signals received from the encoder 20 attached to the head motor 18 in a preselected time period (16 ms) at steady state speed. The number of signals that should be received (representing a distance) at the desired speed is also then calculated. These two numbers are compared and if the measured value is larger than the desired value then the drive signal to the motor is decreased by the lowest significant bit of the drive number byte from the head control microcomputer 2 (each lowest significant bit is equal to 1/300 of full scale). The location in the microcomputer memory that saves the drive value for the left or right direction of motion is also decreased by one lowest significant bit. If the measured value is smaller than the calculated value then the drive voltage is increased by one lowest significant bit and also the drive value in memory. This procedure continues, repeating the measurement and calculations every 16 ms until the head begins stopping. The number of encoder signals is calculated by multiplying the number of encoder signals per inch (300) by the speed value (6 times the speed in in/sec) times 16 ms. When properly scaled this equation becomes:-

(11)     Number of Encoder signals  =  .796 * Speed Value

The drive voltage value which remains at the end of the line is saved and used as the initial drive voltage value the next time the head is moving in the same direction if the speed has not changed. If the head speed is changed then this drive value is lost and is replaced by the calculated initial drive value for the new speed. A different drive value is saved for each direction to account for drive component and frictional differences. When stopping begins, the last drive value is saved for use the next time motion is in the same direction and the speed has not changed.

The high speed deceleration process will now be described with reference to Figure 15. It should be noted that deceleration is performed in a manner similar to acceleration and utilises the same interrupting technique that was used in acceleration and utilises the same time between interrupts as were used in acceleration. The VIR voltage value is subtracted from the current drive voltage value VSS. This resulting value is then tested. If the result is less than or equal to zero a drive voltage of opposite polarity is applied to the motor by changing the logic level of the LR line from the head control microcomputer 2. If the result is greater than zero, the system is considered to be in a 'Transition mode' (TR). If the steady state voltage is less than the VIR voltage value, then there is no Transition mode.

In 'Transition mode' the drive direction transistors are not changed to the opposite state, but a modified drive signal from the decoder 14, controlled by the motor drive value from the head control microcomputer 2, is applied to either the lower transistor Q3 or Q4 of the currently active section of the 'H' driver (See Figures 5a to 5d). The drive signal from the decoder 14 is modified by supplying the magnitude complement of the current modulator value from the head control microcomputer 2. The magnitude complement is calculated by subtracting the modulator value from 300. A 'Transition mode' bit is also set on. Starting from a value represented by the sum of the fractional voltage term Vf plus the Emf voltage term VEMF (the steady state drive voltage value) minus the IR term VIR an additional amount $\Delta v$ is subtracted therefrom periodically. The rate at which the motor drive value is decreased when moving right (for motion to the left a negative value is increased).

This voltage decrease is performed in an interrupt routine. If the transition mode bit is ON the motor drive value is magnitude complemented before being output. THis drive value decrease procedure continues until the motor drive value reaches zero or until zero velocity is reached. When zero voltage is reached, the transition mode bit is set OFF and the drive direction is changed. Once a motor drive value of zero is reached when decelerating with the 'Transition mode' bit ON, the drive control output is modified to activate drive in the opposite direction and the modulator value represents a positive drive in the other direction. When zero velocity is reached the head control microcomputer 2 tests to see if another command is pending. If the next command is ready and is for the same final speed as th previous command but in the opposite direction and the speed is not a 'Low speed' operation then the 'Turnaround sequence' is used. If the conditions for the Turnaround sequence are not met, head motion is stopped and the next command is processed in the normal way.

The Turnaround sequence will now be described with reference to Figure 16. In a Turnaround sequence the head is to continue travelling in the current direction that is active and then to travel in the opposite direction from the previous motion without waiting at zero velocity. When zero velocity is reached after a deceleration and turnaround is required, the frictional voltage value Vf is doubled and is then subtracted from the current voltage value (or is added if motion is in the opposite direction). This voltage change reflects the fact that the frictional effects that were helping stop the head will now work in the opposite direction to impede acceleration and permits the motion to continue without stopping as illustrated in Figure 16. After zero velocity has been reached, the standard acceleration voltage change procedure including interrupts at the previously defined rate are performed until the maximum voltage or desired steady state velocity is reached.

**Claims**

1. A printer comprising
   a print head (24) for performing printing operations on a print medium,
   a drive system (16, 18) for moving said print head across a print medium at a selected speed, and
   a print head control system including
   generating means (20) for generating print head movement signals (ENC A, ENC B) corresponding to print head movement, and
   a processor (2, 10), responsive to said print head movement signals and a command signal representing a required print head movement speed, to generate a drive signal (PWM) for supplying to said drive system so as cause movement of said print head at said required speed,
   characterised in that said print head control system comprises
   means (2) for repeatedly comparing said print head movement signals with said command signal at predetermined time intervals and for changing said drive signal by an equal amount for each comparison operation that indicates that said print head movement speed differs from said command signal speed, until said print head attains said required speed.

2. A printer as claimed in claim 1 characterised in that
   said print head movement signal generating means comprises means (20) coupled to said print head drive system for generating two sequences of pulses (ENC A, ENC B) each representing an increment of movement of said print head, and in that
   said processor comprises means for counting the number of pulses in one of said sequences of pulses generated in each successive time interval which represents the speed of movement of said print head, and means for comparing said number of pulses with a number corresponding to said command signal speed.

3. A printer as claimed in claim 1 characterised in that
   said print head movement signal generating means comprises means (20) coupled to said print head drive system for generating two sequences of pulses (ENC A, ENC B) each representing an increment of movement of said print head, and in that
   said processor comprises means for determining the time period between successive pulses of the pulses of one of said sequences of pulses which represents the speed of movement of said print head, and means for comparing said time period with another time period corresponding to said command signal speed.

4. A printer as claimed in any one of the preceding claims characterised in that said drive signal is represented by a digital number and said print head control system comprises means for changing said drive signal by changing the lowest significant bit of the digital number representing said drive signal.

5. A method of controlling the movement of the print head (24) of a printer, of the type which comprises a print head for performing printing operations on a print medium, and a drive system (16, 18) for moving said print head across a print medium at a selected speed, comprising
   generating print head movement signals (ENC A, ENC B,) corresponding to print head movement, and
   generating, in response to said print head movement signals and to a command signal representing a required print head movement speed, a drive signal (PWM) for supplying to said drive system so as cause movement of said print head at said required speed,
   characterised in that said drive signal generation operation comprises
   repeatedly comparing said print head movement signals with said command signal at predetermined time intervals and changing said drive signal by an equal amount for each comparison operation that indicates that said print head movement speed differs from said command signal speed, until said print head attains said required speed.

6. A method as claimed in claim 5 characterised in that
   said print head movement signals are two sequences of pulses (ENC A, ENC B) each representing an increment of movement of said print head, and in that
   said comparison operation comprises counting the number of pulses in one of said sequences of pulses generated in each successive time interval which represents the speed of movement of said print head, and comparing said number of pulses with a number corresponding to said command signal speed.

7. A method as claimed in claim 5 characterised in that
said print head movement signals are two sequences of pulses (ENC A, ENC B) each representing an increment of movement of said print head, and in that
said comparison operation comprises determining the time period between successive pulses of the pulses of one of said sequence of pulses which represents the speed of movement of said print head, and comparing said time period with another time period corresponding to said command signal speed.

8. A method as claimed in any one of the preceding claims 5, 6 or 7 characterised in that said drive signal is represented by a digital number and said drive signal changing operation is performed by changing the lowest significant bit of the digital number representing said drive signal.

**Revendications**

1. Imprimante comprenant
une tête d'impression (24) pour effectuer des opérations d'impression sur un support d'impression,
un système d'entraînement (16,18) pour déplacer ladite tête d'impression sur un support d'impression, à une vitesse choisie, et
un système de commande de tête d'impression comportant
des moyens de génération (20) pour engendrer des signaux de déplacement de tête d'impression (ENC A, ENC B) correspondant au déplacement de la tête d'impression, et
un processeur (2,10), qui répond auxdits signaux de déplacement de tête d'impression et à un signal d'instruction représentant une vitesse requise de déplacement de la tête d'impression, pour engendrer un signal d'entraînement (PWM) à fournir audit système d'entraînement de façon à provoquer le déplacement de ladite tête d'impression à ladite vitesse requise,
caractérisée en ce que ledit système de commande de tête d'impression comprend
des moyens (2) pour comparer répétitivement les dits signaux de déplacement de tête d'impression audit signal d'instruction, à intervalles de temps prédéterminés, et pour changer ledit signal d'entraînement d'une quantité égale pour chaque opération de comparaison qui indique que ladite vitesse de déplacement de tête d'impression diffère de ladite vitesse de signal d'instruction, jusqu'à ce que ladite tête d'impression atteigne ladite vitesse requise.

2. Imprimante suivant la revendication 1, caractérisée en ce que
lesdits moyens de génération de signaux de déplacement de tête d'impression comprennent des moyens (20) couplés audit système d'entraînement de tête d'impression pour engendrer deux séquences d'impulsions (ENC A, ENC B) représentant chacune un incrément de déplacement de la dite tête d'impression, et en ce que
ledit processeur comprend des moyens pour compter le nombre d'impulsions dans une desdites séquences d'impulsions engendrées dans chaque inervalle de temps successif, qui représente la vitesse de déplacement de ladite tête d'impression, et des moyens de comparaison dudit nombre d'impulsions avec un nombre correspondant à ladite vitesse de signal d'instruction.

3. Imprimante suivant la revendication 1, caractérisée en ce que
lesdits moyens de génération de signaux de déplacement de tête d'impression comprennent des moyens (20) couplés audit système d'entraînement de tête d'impression pour engendrer deux séquences d'impulsions (ENC A, ENC B) représentant chacune un incrément de déplacement de ladite tête d'impression, et en ce que
ledit processeur comprend des moyens de détermination de la période de temps entre impulsions successives des impulsions d'une desdites séquences d'impulsions, qui représente la vitesse de déplacement de ladite tête d'impression, et des moyens de comparaison de ladite période avec une autre période correspondant à ladite vitesse de signal d'instruction.

4. Imprimante suivant l'une quelconque des revendications précédentes, caractérisée en ce que le dit signal d'entraînement est représenté par une valeur numérique et ledit système de commande de tête d'impression comprend des moyens de modification dudit signal d'entraînement par changement du bit de poids faible de la valeur numérique représentant ledit signal d'entraînement.

**5.** Méthode de commande du mouvement de la tête d'impression (24) d'une imprimante, du type qui comprend une tête d'impression pour effectuer des opérations d'impression sur un support d'impression, et un système d'entraînement (15,18) pour déplacer ladite tête d'impression transversalement à un support d'impression, à une vitesse choisie, comprenant :

la génération de signaux de déplacement de tête d'impression (ENC A, ENC B) correspondant au déplacement de la tête d'impression, et

la génération, en réponse auxdits signaux de déplacement de tête d'impression et à un signal d'instruction représentant une vitesse requise de déplacement de tête d'impression, d'un signal d'entraînement (PWM) à fournir au dit système d'entraînement de façon à provoquer le déplacement de ladite tête d'impression à ladite vitesse requise,

caractérisée en ce que ladite opération de génération de signaux d'entraînement comprend

la comparaison répétitive desdits signaux de déplacement de tête d'impression audit signal d'instruction, à intervalles de temps prédéterminés, et le changement dudit signal d'entraînement d'une quantité égale pour chaque opération de comparaison qui indique que ladite vitesse de déplacement de tête d'impression diffère de ladite vitesse de signal d'instruction, jusqu'à ce que ladite tête d'impression atteigne ladite vitesse requise.

**6.** Méthode suivant la revendication 5, caractérisée en ce que

lesdits signaux de déplacement de tête d'impression sont deux séquences d'impulsions (ENC A,ENC B) représentant chacune un incrément de déplacement de ladite tête d'impression, et en ce que ladite opération de comparaison comprend le comptage du nombre d'impulsions dans une desdites séquences d'impulsions engendrées dans chaque intervalle de temps successif, qui représente la vitesse de déplacement de ladite tête d'impression, et la comparaison dudit nombre d'impulsions avec un nombre correspondant à ladite vitesse de signal d'instruction.

**7.** Méthode suivant la revendication 5, caractérisée en ce que :

lesdits signaux de déplacement de tête d'impression sont deux séquences d'impulsions (ENC A, ENC B) représentant chacune un incrément de déplacement de la dite tête d'impression, et en ce que ladite opération de comparaison comprend la détermination de la durée entre des impulsions successives des impulsions d'une desdites séquences d'impulsions, qui représente la vitesse de déplacement de ladite tête d'impression, et la comparaison de ladite durée avec une autre durée correspondant à ladite vitesse de signal d'instruction.

**8.** Méthode suivant l'une quelconque des revendications précédentes 5, 6 ou 7, caractérisée en ce que ledit signal d'entraînement est représenté par une valeur numérique et ladite opération de changement du signal d'entraînement est effectuée par changement du bit de poids faible de la valeur numérique représentant ledit signal d'entraînement.

**Patentansprüche**

**1.** Drucker, der aufweist:

einen Druckkopf (24) zum Durchführen von Druckvorgängen auf einem Druckmedium,

ein Treibersystem (16, 18) zum Bewegen des Druckkopfs über ein Druckmedium mit einer ausgewählten Geschwindigkeit und

ein Steuersystem für den Druckkopf, das aufweist:

ein Generatormittel (20) zum Erzeugen von Signalen (ENC A, ENC B) für eine Druckkopfbewegung, die einer Druckkopfbewegung entsprechen und

einen Prozessor (2, 10), der auf die Signale für eine Druckkopfbewegung und ein Befehlsignal anspricht, das eine erforderliche Geschwindigkeit für eine Druckkopfbewegung repräsentiert, um ein Treibersignal (PWM) zum Versorgen des Treibersystems zu erzeugen, damit eine Bewegung des Druckkopfs mit der erforderlichen Geschwindigkeit bewirkt wird,

dadurch gekennzeichnet, daß das Steuersystem für den Druckkopf aufweist:

Mittel (2) zum wiederholten Vergleichen der Signale für eine Druckkopfbewegung mit dem Befehlsignal in vorbestimmten Zeitintervallen und zum Ändern des Treibersignals für jeden Vergleichsvorgang in einem gleichen Ausmaß, das anzeigt, daß sich die Geschwindigkeit für eine Druckkopfbewegung von der Steuersignal-Geschwindigkeit solange unterscheidet, bis der Druckkopf die erforderliche Geschwindigkeit erreicht.

2. Drucker nach Anspruch 1, dadurch gekennzeichnet, daß
das Generatormittel für ein Signal für eine Druckkopfbewegung ein Mittel (20) aufweist, das mit dem Treibersystem für den Druckkopf verbunden ist, um zwei Folgen von Impulsen (ENC A, ENC B) zu erzeugen, bei welchen jeder ein Bewegungsinkrement des Druckkopfs repräsentiert und daß
der Prozessor aufweist: Mittel, um die Zahl von Impulsen in einer der Folgen von in jedem nachfolgenden Zeitintervall erzeugten Impulsen zu zählen, welches die Bewegungsgeschwindigkeit des Druckkopfs repräsentiert und Mittel, um die Anzahl von Impulsen mit einer Steuersignal-Geschwindigkeit entsprechenden Zahl zu vergleichen.

3. Drucker nach Anspruch 1, dadurch gekennzeichnet, daß
das Generatormittel für ein Signal für eine Druckkopfbewegung ein Mittel (20) aufweist, das mit dem Treibersystem für den Druckkopf verbunden ist, um zwei Folgen von Impulsen (ENC A, ENC B) zu erzeugen, bei welchen jeder ein Bewegungsinkrement des Druckkopfs repräsentiert und daß,
der Prozessor aufweist:
Mittel, um die Zeitperiode zwischen aufeinanderfolgenden Impulsen der Impulse einer der Folgen von Impulsen zu bestimmen, welches die Bewegungsgeschwindigkeit des Druckkopfs repräsentiert und Mittel, um die Zeitperiode mit einer anderen, der Steuersignal-Geschwindigkeit entsprechenden Zeitperiode zu vergleichen.

4. Drucker nach irgendeinem der vorgehenden Ansprüche dadurch gekennzeichnet, daß das Treibersignal durch eine digitale Zahl repräsentiert ist und das Steuersystem für den Druckkopf Mittel aufweist, um das Treibersignal durch Ändern des niedervertigsten Bits der digitalen Zahl zu ändern, welche das Antriebssignal repräsentiert.

5. Verfahren zum Steuern der Bewegung des Druckkopfs (24) eines Druckers der Art, die einen Druckkopf zum Durchführen von Druckvorgängen auf einem Druckmedium und ein Treibersystem (16, 18) zum Bewegen des Druckkopfs über ein Druckmedium mit einer ausgewählten Geschwindigkeit aufweist, das umfaßt:
Erzeugen von Signalen (ENC A, ENC B) für eine Druckkopfbewegung, die einer Druckkopfbewegung entsprechen und
Erzeugen eines Treibersignals (PWM) entsprechend den Signalen für eine Druckkopfbewegung und einem Befehlsignal, das eine erforderliche Geschwindigkeit für eine Druckkopfbewegung repräsentiert, um das Antriebssystem zu versorgen, damit eine Bewegung des Druckkopfs mit der erforderlichen Geschwindigkeit bewirkt wird,
dadurch gekennzeichnet, daß der Erzeugungsvorgang für ein Treibersignal umfaßt:
wiederholtes Vergleichen der Signale für eine Druckkopfbewegung mit dem Befehlsignal in vorbestimmten Zeitintervallen und Ändern des Treibersignals für jeden Vergleichsvorgang in einem gleichen Ausmaß, das anzeigt, daß sich die Geschwindigkeit für eine Druckkopfbewegung von der Steuersignal-Geschwindigkeit so lange unterscheidet, bis der Druckkopf die erforderliche Geschwindigkeit erreicht.

6. Verfahren nach Anspruch 5, dadurch gekennzeichnet, daß
die Signale für eine Druckkopfbewegung zwei Folgen von Impulsen (ENC A, ENC B) sind, bei welchen jeder ein Bewegungsinkrement des Druckkopfs repräsentiert und daß
der Vergleichsvorgang umfaßt:
das Zählen der Zahl von Impulsen in einer der Folgen von Impulsen, die in jedem nachfolgenden Zeitintervall erzeugt werden, welches die Bewegungsgeschwindigkeit des Druckkopfs repräsentiert und das Vergleichen der Anzahl von Impulsen mit einer der Steuersignal-Geschwindigkeit entsprechenden Zahl.

7. Verfahren nach Anspruch 5 dadurch gekennzeichnet, daß
die Signale für eine Druckkopfbewegung zwei Folgen von Impulsen (ENC A, ENC B) sind, bei welchen jeder ein Bewegungsinkrement des Druckkopfs repräsentiert und daß
der Vergleichsvorgang umfaßt: das Bestimmen der Zeitperiode zwischen aufeinanderfolgenden Impulsen der Impulse einer der Folgen von Impulsen, welche die Bewegungsgeschwindigkeit des Druckkopfs repräsentiert und Vergleichen der Zeitperiode mit einer anderen, der Steuersignal-Geschwindigkeit entsprechenden Zeitperiode.

8. Verfahren nach irgendeinem der vorgehenden Ansprüche 5, 6 oder 7 dadurch gekennzeichnet, daß das Treibersignal durch eine digitale Zahl repräsentiert wird und der Änderungsvorgang für das Treibersignal durch Ändern des niederwertigsten Bits der digitalen Zahl durchgeführt wird, welche das Treibersignal repräsentiert.

18

FIG.1

FIG.2

VELOCITY — FIG. 3a

IR VOLTAGE — FIG. 3b

FRICTION VOLTAGE — FIG. 3c

BACK EMF VOLTAGE — FIG. 3d

TOTAL VOLTAGE — FIG. 3e

FIG. 3

FIG. 4a

FIG. 4 b

FIG. 4

FIG.5a

FIG.5b

FIG.5c

FIG.5d

FIG. 5

FIG. 6

23

FIG. 7

FIG. 8

FIG. 9

FIG. 10

FIG. 11

FIG.12

FIG 13

FIG. 14

FIG. 15

FIG. 16

27